# EUROPEAN PATENT APPLICATION

(11) **EP 4 083 790 A1**
(43) Date of publication of application: **02.11.2022**
(21) Application number: 19957831.1
(22) Date of filing: 26.12.2019
(51) Int. Cl.: G06F 9/445

(54) **INFORMATION PROCESSING SYSTEM, INFORMATION PROCESSING DEVICE, INFORMATION PROCESSING METHOD, AND COMPUTER PROGRAM**

(71) Applicant: NEC Corporation, 108-8001 Tokyo (JP)
(72) Inventor: IMAI, Yoshiaki, Tokyo 108-8001 (JP)
(74) Representative: Betten & Resch
(86) International application number: PCT/JP2019/051154
(87) International publication number: WO 2021/130967

(57) **Abstract**

An information processing system includes: an execution unit that performs a process by using an engine; an acquisition unit that obtains a processing information for performing the process; an extraction unit that extracts an identification information for identifying the engine suitable to perform the process, from the processing information; and a switching unit that switches the engine used by the execution unit on the basis of the identification information. According to such an information processing system, it is possible to switch the engine and to appropriately perform the process.

## Description

### Technical Field

The disclosure relates to an information processing system, an information processing apparatus, an information processing method, and a computer program.

### Background Art

A known system of this type is configured to reconstruct a processing circuitry or an algorithm in processing execution. For example, Patent Literature 1 discloses a technique/technology of reconstructing an arithmetic circuit on the basis of an evaluation result of a reconstruction condition. Patent Literature 2 discloses a technique/technology of performing a video process on a reconfigurable hardware computer.

### Citation List

### Patent Literature

Patent Literature 1: JP2008-181361A
Patent Literature 2: JP2014-236465A

### Summary

### Technical Problem

When performing reconstruction, it is preferable to reconstruct a configuration to an appropriate one corresponding to a process to be performed. In each of the above-described Patent Literatures, however, what type of process is to be performed and how to perform reconstruction have not been sufficiently studied and there is room for improvement.

It is an example object of the disclosure to provide an information processing system, an information processing apparatus, an information processing method, and a computer program for solving the problems described above.

### Solution to Problem

An information processing system according to an example aspect of the disclosure includes: an execution unit that performs a process by using an engine; an acquisition unit that obtains a processing information for performing the process; an extraction unit that extracts an identification information for identifying the engine suitable to perform the process, from the processing information; and a switching unit that switches the engine used by the execution unit on the basis of the identification information.

An information processing apparatus according to an example aspect of the disclosure includes: an execution unit that performs a process by using an engine; an acquisition unit that obtains a processing information for performing the process; an extraction unit that extracts an identification information for identifying the engine suitable to perform the process, from the processing information; and a switching unit that switches the engine used by the execution unit on the basis of the identification information.

An information processing method according to an example aspect of the disclosure is an information processing method for performing a process by using an engine, the information processing method including: obtaining a processing information for performing the process; extracting an identification information for identifying the engine suitable to perform the process, from the processing information; and switching the engine used by the execution unit on the basis of the identification information.

A computer program according to an example aspect of the disclosure is a computer program for performing a process by using an engine, the computer program operating a computer: to obtain a processing information for performing the process; to extract an identification information for identifying the engine suitable to perform the process, from the processing information; and to switch the engine used by the execution unit on the basis of the identification information.

### Brief Description of Drawings

[FIG. 1] FIG. 1 is a block diagram illustrating a functional configuration of an information processing system according to a first example embodiment.
[FIG. 2] FIG. 2 is a block diagram illustrating a hardware configuration of the information processing system according to the first example embodiment.
[FIG. 3] FIG. 3 is a flowchart illustrating a flow of operation of the information processing system according to the first example embodiment.
[FIG. 4] FIG. 4 is a block diagram illustrating a functional configuration of an information processing system according to a second example embodiment.
[FIG. 5] FIG. 5 is a flowchart illustrating a flow of operation of the information processing system according to the second example embodiment.
[FIG. 6] FIG. 6A to FIG. 6C are image diagrams illustrating an operation example of the information processing system according to the second example embodiment.

### Description of Example Embodiments

Hereinafter, an information processing system, an information processing apparatus, an information processing method, and a computer program according to example embodiments will be described with reference to the drawings.

### <First Example Embodiment

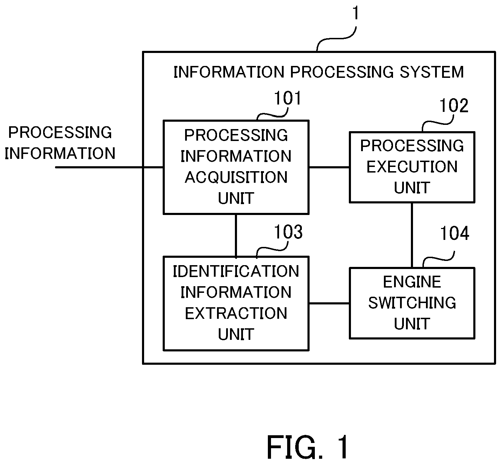

The information processing system according to a first example embodiment will be described with reference to FIG. 1 to FIG. 3.

### (Functional Configuration)

Referring first to FIG. 1, a functional configuration of the information processing system according to the first example embodiment will be described. FIG. 1 is a block diagram illustrating the functional configuration of the information processing system according to the first example embodiment.

In FIG. 1, an information processing system 1 according to the first example embodiment is configured as a system for performing a process by using an obtained processing information. The information processing system 1 includes, as processing blocks for realizing its function, a processing information acquisition unit 101, a processing execution unit 102, an identification information execution unit 103, and an engine switching unit 104.

The processing information acquisition unit 101 is configured to obtain a processing information used for a process executed by the information processing system 1 (specifically, a process performed by the processing execution unit 102 described later). The processing information acquisition unit 101 obtains the processing information, for example, from various apparatuses, various sensors or the like that are configured to communicate with the information processing system 1. The processing information is not particularly limited, but an example thereof includes video data, image data, audio data or the like. The processing information obtained by the processing information acquisition unit 101 is configured to be outputted to each of the processing execution unit 102 and the identification information execution unit 103.

The processing execution unit 102 is configured to perform a process by using the processing information obtained by the processing information acquisition unit 101. The processing execution unit 102 includes, for example, an arithmetic circuit, and performs a process by using an engine. The "engine" here is an algorithm for performing a process, and may be implemented by software. Alternatively, it may be implemented by a circuit configuration. The process performed by processing execution unit 102 may be changed in accordance with the inputted processing information. The engine used by processing execution unit 102 is switchable by the engine switching unit 104 described later.

The identification information execution unit 103 is configured to extract an identification information for identifying an appropriate engine from the processing information obtained by the processing information acquisition unit 101. The identification information execution unit 103 may be configured to perform various processes on the processing information in order to extract the identification information. An example of the identification information includes information about an attribute of an object included in video data that are the processing information. Incidentally, what type of identification information is to be extracted may be set in advance, or may be appropriately determined in accordance with the inputted processing information. The identification information extracted by the identification information execution unit 103 is configured to be outputted to the engine switching unit 104.

The engine switching unit 104 is configured to be switch the engine used by the processing execution unit 102 on the basis of the identification information extracted by the identification information execution unit 103. Specifically, the engine switching unit 104 determines what type of process is required of the processing execution unit 102 from the identification information, and determines an appropriate engine for performing the process. Then, the engine switching unit 104 switches the engine used by the processing execution unit 102 to the determined engine. The switching of the engine can be realized, for example, by loading the engine on the processing execution unit 102 or by reconstructing a circuit configuration of the processing execution unit 102. Incidentally, the engine switching unit 104 may switch each of a plurality of engines when the processing execution unit 102 uses the engines. That is, the engine switching unit 104 may switch a combination of the engines used by the processing execution unit 102.

### (Hardware Configuration)

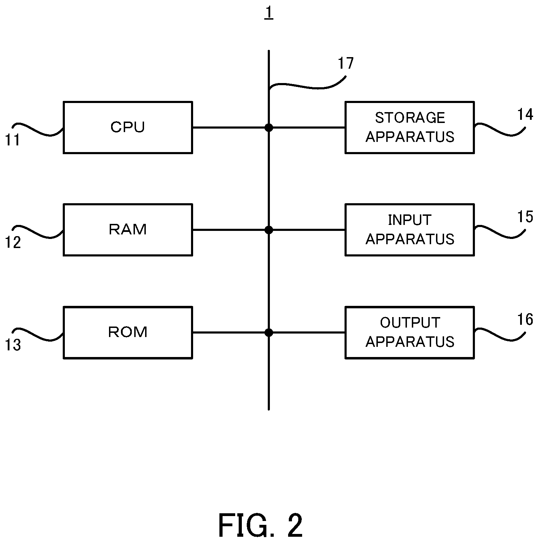

Next, a hardware configuration of the information processing system 1 according to the first example embodiment will be described with reference to FIG. 2. FIG. 2 is a block diagram illustrating the hardware configuration of the information processing system according to the first example embodiment.

As illustrated in FIG. 2, the information processing system 1 according to the first example embodiment includes a CPU (Central Processing Unit) 11, a RAM (Random Access Memory) 12, a ROM (Read Only Memory) 13, and a storage apparatus 14. The information processing system 1 may further include an input apparatus 15 and an output apparatus 16. The CPU 11, the RAM 12, the ROM 13, the storage apparatus 14, the input apparatus 15, and the output apparatus 16 are connected through a data bus 17.

The CPU 11 reads a computer program. For example, the CPU 11 is configured to read a computer program stored by at least one of the RAM 12, the ROM 13 and the storage apparatus 14. Alternatively, the CPU 11 may read a computer program stored by a computer readable recording medium by using a not-illustrated recording medium reading apparatus. The CPU 11 may obtain (i.e., read) a computer program from a not-illustrated apparatus that is located outside the information processing system 1 through a network interface. The CPU 11 controls the RAM 12, the storage apparatus 14, the input apparatus 15, and the output apparatus 16 by executing the read computer program. Especially in the example embodiment, when the CPU 11 executes the read computer program, a functional block for switching the engine and performing a process is implemented in the CPU 11 (see FIG. 1).

The information processing system 1 according to the first example embodiment may include a not-illustrated accelerator in addition to the above-described CPU 11. The accelerator is a hardware added to increase a processing capacity of the information processing system 1, and is configured to perform a process by using the engine as in the CPU 11. The accelerator is configured, for example, as a FPGA (Field Programmable Gate Array), where a function of Partial Reconfiguration can be used to switch the engine. Incidentally, a plurality of accelerators may be also provided.

The RAM 12 temporarily stores the computer program to be executed by the CPU 11. The RAM 12 temporarily stores the data that is temporarily used by the CPU 11 when the CPU 11 executes the computer program. The RAM 12 may be, for example, a D-RAM (Dynamic RAM).

The ROM 13 stores the computer program to be executed by the CPU 11. The ROM 13 may otherwise store fixed data. The ROM 13 may be, for example, a P-ROM (Programmable ROM).

The storage apparatus 14 stores the data that is stored for a long term by the information processing system 1. The storage apparatus 14 may operate as a temporary storage apparatus of the CPU 11. The storage apparatus 14 may include, for example, at least one of a hard disk apparatus, a magneto-optical disk apparatus, an SSD (Solid State Drive), and a disk array apparatus.

The input apparatus 15 is an apparatus that receives an input instruction from a user of the information processing system 1. The input apparatus 15 may include, for example, at least one of a keyboard, a mouse, and a touch panel.

The output apparatus 16 is an apparatus that outputs information about the information processing system 1 to the outside. For example, the output apparatus 16 may be a display apparatus (e.g., a display) that is configured to display the information about the information processing system 1.

### (Flow of Operation)

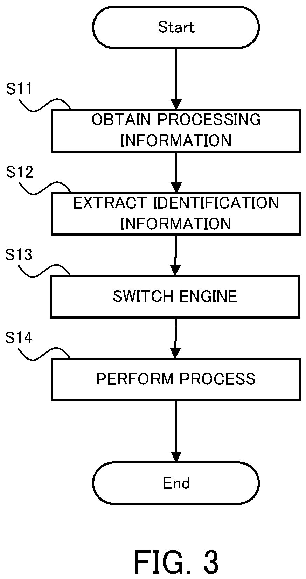

Next, referring to FIG. 3, a flow of operation of the information processing system 1 according to the first example embodiment will be described. FIG. 3 is a flowchart illustrating the flow of the operation of the information processing system according to the first example embodiment.

As illustrated in FIG. 3, in operation of the information processing system 1 according to the first example embodiment, firstly, the processing information acquisition unit 101 obtains the processing information (step S11). Then, the identification information execution unit 103 extracts the identification information from the processing information (step S12).

Subsequently, the engine switching unit 104 switches the engine used by the processing execution unit 102 on the basis of the identification information (step S13). The processing execution unit 102 performs a process by using the processing information by using the switched engine (step S14).

### (Technical Effect)

Next, a technical effect obtained by the information processing system 1 according to the first example embodiment will be described.

As described in FIG. 1 to FIG. 3, in the information processing system 1 according to the first example embodiment, the engine used by the processing execution unit 102 is switched before the processing execution unit 102 performs a process. Therefore, as compared with a case of not switching the engine, the processing execution unit 102 is allowed to perform a process in a more appropriate state. In addition, the switching of the engine is performed on the basis of the identification information extracted from the processing information. Therefore, it is possible to switch to an engine suitable for the process performed by the processing execution unit 102.

### <Second Example Embodiment

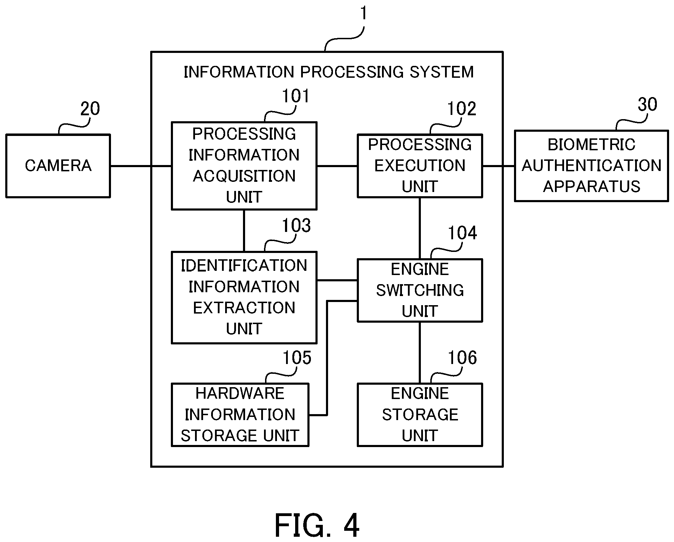

Next, an information processing system according to a second example embodiment will be described with reference to FIG. 4 to FIG. 6C. The second example embodiment is partially different from the first example embodiment described above only in the configuration and operation, and are substantially the same in the other parts. Therefore, the parts that differ from the first example embodiment will be described in detail below, and the other overlapping portions will not be described.

### (Functional Configuration)

Referring first to FIG. 4, a functional configuration of the information processing system according to the second example embodiment will be described. FIG. 4 is a block diagram illustrating the functional configuration of the information processing system according to the second example embodiment. Incidentally, in FIG. 4, the same components as those illustrated in FIG. 1 carry the same reference numerals.

In FIG. 4, the information processing system 1 according to the second example embodiment is configured to perform a process of generating data used by a biometric authentication apparatus 30, by using video data inputted from a camera 20. Incidentally, the camera 20 is configured to capture an image/video of a target person of biometric authentication. The biometric authentication apparatus 30 is configured to perform the biometric authentication (here, face authentication) of the target person. The biometric authentication apparatus 30 may be configured as a cloud. A detailed description of a specific method of the biometric authentication will be omitted here since the existing method can be adopted as appropriate.

The information processing system 1 according to the second example embodiment includes a hardware information storage unit 105 and an engine storage unit 106 in addition to the components in the first example embodiment (see FIG. 1).

The hardware information storage unit 105 is configured to store a configuration information indicating the hardware configuration of the information processing system 1. When the hardware configuration of the information processing system 1 is changed, the configuration information stored in the hardware information storage unit 105 is updated as appropriate. The configuration information stored in the hardware information storage unit 105 is appropriately readable by the engine switching unit 104.

The engine storage unit 106 stores a plurality of engines that can be used by the processing execution unit 102. The engines stored in the engine storage unit 106 may be added, deleted, or upgraded. The engines stored in the engine storage unit 106 are appropriately readable by the engine switching unit 104. The engine switching unit 104 reads the engine stored in the engine storage unit 106 and loads it on the processing execution unit 102 so that the engine can be switched.

### (Flow of Operation)

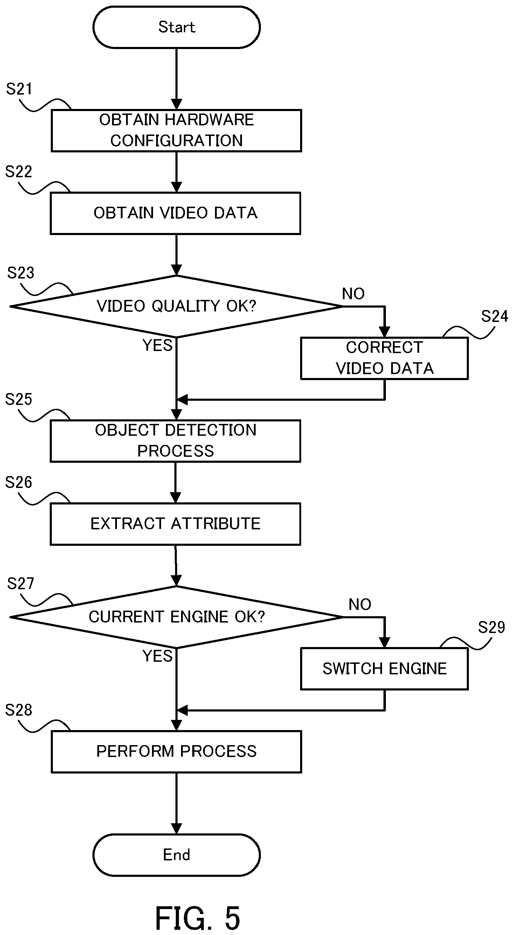

Next, referring to FIG. 5, a flow of operation of the information processing system 1 according to the second example embodiment will be described. FIG. 5 is a flowchart illustrating the flow of the operation of the information processing system according to the second example embodiment.

As illustrated in FIG. 5, in operation of the information processing system 1 according to the second example embodiment, firstly, the engine switching unit 104 obtains the configuration information from the hardware information storage unit 105 (step S21). A process of obtaining the configuration information may be performed when there is a possibility that the hardware configuration of the information processing system 1 is changed. For example, the engine switching unit 104 may obtain the configuration information when the information processing system 1 is started.

Subsequently, the processing information acquisition unit 101 obtains the video data from the camera 20 (step S22). Then, the processing information acquisition unit 101 determines whether or not the quality of the video data is appropriate (step S23). Specifically, the processing information acquisition unit 101 determines whether or not the quality of the obtained video data is high enough to appropriately perform a process in the processing execution unit 102. The quality of the video data can be determined, for example, on the basis of a luminance value of each pixel or the like.

When it is determined that the quality of the video data is not appropriate (the step S23: NO), the processing information acquisition unit 101 performs a process of correcting the video data (step S24). In other words, the processing information acquisition unit 101 performs a process of enhancing the quality of the video data. For example, the processing data acquisition unit 101 performs a backlight correction process, an image sharpening process, or a similar process on the video data.

When it is determined that the quality of the video data is appropriate (the step S23: YES), or when the process of correcting the video data is performed, the identification information execution unit 103 performs a process of detecting an object from the video data (step S25). Specifically, the identification information execution unit 103 performs a process of detecting a face and a human form of a target person who appears in the video data. Incidentally, this process may be performed by the processing execution unit 102.

Subsequently, the identification information execution unit 103 performs a process of extracting an attribute of the extracted object (i.e., target person) (step S26). Here, the "attribute" is information indicating a condition/state of the target person and is extracted as a specific example of the identification information. The extracted attribute influences a process performed by the processing execution unit 102. For example, when information used for the face authentication of the target person is generated, the presence/absence of a mask, sunglasses or the like may be extracted as the attribute.

Subsequently, the engine switching unit 104 determines whether or not the processing execution unit 102 is allowed to perform a process (i.e., a process of generating data to be used for the biometric authentication) by using the current engine, on the basis of the configuration information obtained from the hardware information storage unit 105 and the attribute (i.e., identification information) of the target person extracted by the identification information execution unit 103 (step S27). Specifically, the engine switching unit 104 determines whether or not the process of generating the data to be used for the biometric authentication can be performed, by using the processing information obtained by the processing execution unit 102. Alternatively, the engine switching unit 104 may determine whether or not the process of generating the data to be used for the biometric authentication can be performed at a sufficient velocity, by using the processing information obtained by the processing execution unit 102. Alternatively, the engine switching unit 104 may determine whether or not the process of generating the data to be used for the biometric authentication can be performed with sufficiently small power, by using the processing information obtained by the processing execution unit 102.

When it is determined that the process may be performed by using the current engine (the step S27: YES), the engine switching unit 104 does not switch the engine used by the processing execution unit 102. Therefore, the processing execution unit 102 performs the process of generating the data to be used for the biometric authentication, by using the current engine (e.g., an initially set engine) (step S28).

On the other hand, when it is determined that the process should not be performed by using the current engine (the step S27: NO), the engine switching unit 104 switches the engine used by the processing execution unit 102 (step S29). Specifically, the engine switching unit 104 reads an engine capable of performing a process corresponding to the obtained processing information, from among the plurality of engines stored in the engine storage unit 106, and replaces the engine of the processing execution unit 102 with the read engine. Alternatively, the engine switching unit 104 may read an engine capable of mostly quickly performing a process corresponding to the obtained processing information, from among the plurality of engines stored in the engine storage unit 106, and replace the engine of the processing execution unit 102 with the read engine. Alternatively, the engine switching unit 104 may read an engine capable of performing a process corresponding to the obtained processing information with least power, from among the plurality of engines stored in the engine storage unit 106, and replace the engine of processing execution unit 102 with the read engine. Furthermore, the engine switching unit 104 may switch the engine by using the configuration information obtained in the step S21. For example, the engine storage unit 106 stores a plurality of engines corresponding to various hardware configurations, and the engine switching unit 104 may read an engine suitable for a current hardware configuration from among them, and replace the engine of the processing execution unit 102 with the read engine. Then, the processing execution unit 102 performs the process of generating the data to be used for the biometric authentication, by using the switched engine (step S28).

Incidentally, out of the above-described processes, the process of determining whether the quality of the video data is appropriate (i.e., the process in the step S23) may be not necessarily performed. In this case, regardless of the quality of the video data obtained in the step S22, the process of detecting an object (i.e., step S25) may be performed by using the video data.

In addition, out of the above-described processes, the process of determining whether or not the process may be performed by using the current engine (i.e., the process in the step S27) may be not necessarily performed. In this case, regardless of whether or not the process should be performed by using the current engine, the engine switching unit 104 may perform the process of switching the engine used by the processing execution unit 102 (i.e., step S29). However, switching the engine may result in the same engine as the current one (i.e., there may be no substantially switching of the engine).

### (Specific Operation Example)

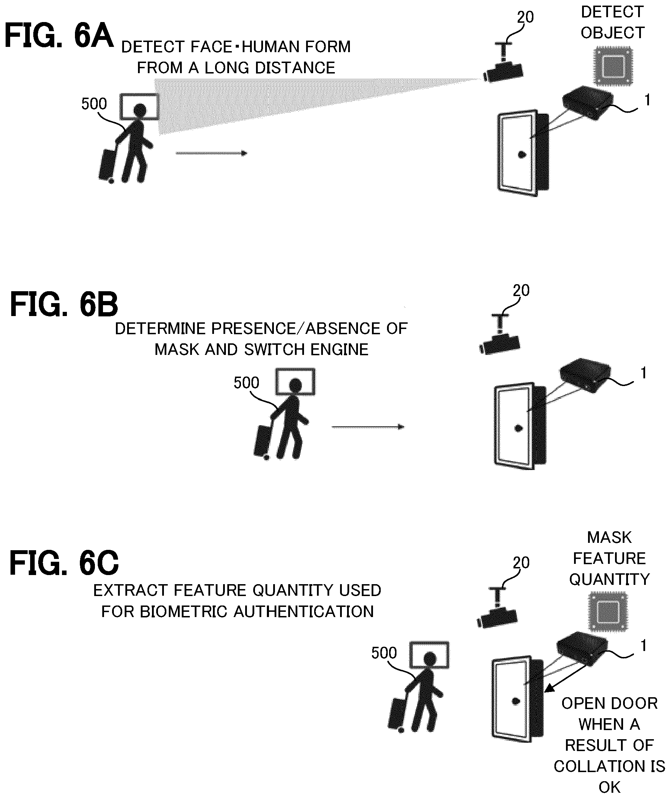

Next, a specific operation example of the information processing system 1 according to the second example embodiment will be described with reference to FIG. 6A to FIG. 6C. FIG. 6A to FIG. 6C are image diagrams illustrating an operation example of the information processing system according to the second example embodiment.

In the example illustrated in FIG. 6A to FIG. 6C, the camera 20 is located at a position at which the camera 20 is allowed to image a target person 500 who approaches a door that can be unlocked by the biometric authentication. The information processing system 1 is configured to perform a process of extracting a feature quantity used for the face authentication from an image of the target person obtained from the camera 20. The biometric authentication apparatus 30 is configured to perform the face authentication by using the feature quantity extracted by the information processing system 1, and to unlock the door on the basis of an authentication result.

In FIG. 6A, when the target person 500 enters an imaging range of the camera 20, the identification information execution unit 103 detects the face and the human type of the target person 500. That is, the target person 500 is detected, and a process of detecting a face area from the video data about the target person 500 is performed. This process is performed at a stage where the target person 500 is relatively far (e.g., a few meters or more away) from the door.

When the target person 500 is detected in FIG. 6B, the identification information execution unit 103 determines whether or not the target person 500 is wearing a mask from a face image of the target person (i.e., the face area extracted from the video data). Incidentally, a detailed description of a specific method of determining the presence or absence of the mask will be omitted here since the existing method can be adopted as appropriate.

When it is determined whether or not the target person 500 is wearing a mask, the engine switching unit 104 determines whether or not to switch the engine. Specifically, when the target person is not wearing a mask, the engine switching unit 104 determines that the engine may not be switched (i.e., the normal engine remains). On the other hand, when the target person is wearing a mask, the engine switching unit 104 determines that the engine is to be switched (i.e., the engine is switched to an engine that can extract the feature quantity even when the target person is wearing a mask).

In FIG. 6C, the processing execution unit 102 performs the process of extracting the feature quantity by using the engine corresponding to whether or not the target person 500 is wearing a mask. Therefore, even when the target person 500 is wearing a mask (in other words, in a condition in which it is hard to extract the feature quantity by using the normal engine), the feature quantity can be appropriately extracted. The biometric authentication apparatus 30 performs the face authentication by using the feature quantity extracted in this manner. When a result of the face authentication is successful, the biometric authentication apparatus 30 is instructed to unlock the door.

### (Modified Example)

The above describes a case in which the engine is switched on the basis of the presence or absence of a mask (i.e., a case in which the engine for detecting the feature quantity of the target person who is wearing a mask and the engine for detecting the feature quantity of the target person who is not wearing a mask are switched), but switching to another engine may be also performed.

For example, the engine switching unit 104 may switch to an engine that performs a process of estimating the age of the target person 500, an engine that performs a process of estimating the gender of the target person, an engine that performs a process of estimating a line of sight of the target person, or an engine that performs a process of counting the number of people who are captured by the camera 20. The switching to such engines has a beneficial effect, for example, in situations where individuals need not be identified (e.g., for marketing application).

In addition, the engine switching unit 104 may switch to an engine that performs a process of detecting a crowd, an engine that performs a process of detecting an individual action, an engine that that performs a process of detecting a crowd action, or an engine that performs an IDM (Image Data Mining). In the IDM, for example, face search, congestion search, related person search, or common person search can be realized.

### (Technical Effect)

Next, a technical effect obtained by the information processing system 1 according to the second example embodiment will be described.

As described in FIG. 4 to FIG. 6C, in the information processing system 1 according to the second example embodiment, the process of extracting the feature quantity used for the face authentication can be performed by using an appropriate engine corresponding to the condition/state of the target person. Therefore, it is possible to avoid the failure of appropriate face authentication due to the condition/state of the target person.

In the second example embodiment, the hardware configuration is taken into account when the engine is switched. Therefore, when compared with a case of using only the identification information, it is possible to switch to a more appropriate engine. Furthermore, in the second example embodiment, when the engine is switched, it is determined whether or not the process may be performed by using the current engine. Therefore, it is possible to prevent that unnecessary engine switching is performed. In addition, in the second example embodiment, since the engine storage unit 106 that stores a plurality of engines is provided, the switching of the engine can be performed relatively easily.

### <Supplementary Notes>

The example embodiments described above may be further described as, but not limited to, the following Supplementary Notes below.

### (Supplementary Note 1)

An information processing system described in Supplementary Note 1 is An information processing system including: an execution unit that performs a process by using an engine; an acquisition unit that obtains a processing information for performing the process; an extraction unit that extracts an identification information for identifying the engine suitable to perform the process, from the processing information; and a switching unit that switches the engine used by the execution unit on the basis of the identification information.

### (Supplementary Note 2)

An information processing system described in Supplementary Note 2 is the information processing system described in Supplementary Note 1, further comprising a storage unit that stores a plurality of engines, wherein the switching unit reads the engine from the storage unit and switches the engine used by the execution unit.

### (Supplementary Note 3)

An information processing system described in Supplementary Note 3 is the information processing system described in Supplementary Note 1 or 2, wherein the execution unit performs the process by using a plurality of the engines, and the switching unit switches a combination of the engines used by the execution unit on the basis of the identification information.

### (Supplementary Note 4)

An information processing system described in Supplementary Note 4 is the information processing system described in any one of Supplementary Notes 1 to 3, wherein the switching unit obtains a configuration information indicating a hardware configuration of the information processing system, and switches the engine used by the execution unit on the basis of the identification information and the configuration information.

### (Supplementary Note 5)

An information processing system described in Supplementary Note 5 is the information processing system described in any one of Supplementary Notes 1 to 4, wherein the switching unit determines whether or not the execution unit should perform the process by using a current engine, and switches the engine used by the execution unit when it is determined that process should not be performed by using the current engine.

### (Supplementary Note 6)

An information processing system described in Supplementary Note 6 is the information processing system described in any one of Supplementary Notes 1 to 5, wherein the process includes a process of detecting an object in a video; and the execution unit extracts the identification information from video data obtained as the processing information.

### (Supplementary Note 7)

An information processing system described in Supplementary Note 7 is the information processing system described in any one of Supplementary Notes 1 to 6, wherein the process includes a process of generating an authentication information used for biometric authentication.

### (Supplementary Note 8)

An information processing Supplementary Note according to apparatus 8 is an information processing apparatus including: an execution unit that performs a process by using an engine; an acquisition unit that obtains a processing information for performing the process; an extraction unit that extracts an identification information for identifying the engine suitable to perform the process, from the processing information; and a switching unit that switches the engine used by the execution unit on the basis of the identification information.

### (Supplementary Note 9)

An information processing method described in Supplementary Note 9 is an information processing method for performing a process by using an engine, the information processing method including: obtaining a processing information for performing the process; extracting an identification information for identifying the engine suitable to perform the process, from the processing information; and switching the engine used by the execution unit on the basis of the identification information.

### (Supplementary Note 10)

A computer program described in Supplementary Note 10 is a computer program for performing a process by using an engine, the computer program operating a computer: to obtain a processing information for performing the process; to extract an identification information for identifying the engine suitable to perform the process, from the processing information; and to switch the engine used by the execution unit on the basis of the identification information.

This disclosure is not limited to the examples described above and is allowed to be changed, if desired, without departing from the essence or spirit of this disclosure which can be read from the claims and the entire specification. An information processing system, an information processing apparatus, an information processing method, and a computer program with such changes are also intended to be within the technical scope of this disclosure.

### Description of Reference Codes

1 Information processing system
11 CPU
20 Camera
30 Biometric authentication apparatus
101 Processing information acquisition unit
102 Processing execution unit
103 Identification information extraction unit
104 Engine switching unit
105 Hardware information storage unit
106 Engine storage unit
500 Target person

## Claims

1. An information processing system comprising:
an execution unit that performs a process by using an engine;
an acquisition unit that obtains a processing information for performing the process;
an extraction unit that extracts an identification information for identifying the engine suitable to perform the process, from the processing information; and
a switching unit that switches the engine used by the execution unit on the basis of the identification information.

2. The information processing system according to claim 1, further comprising a storage unit that stores a plurality of engines, wherein
the switching unit reads the engine from the storage unit and switches the engine used by the execution unit.

3. The information processing system according to claim 1 or 2, wherein
the execution unit performs the process by using a plurality of the engines, and
the switching unit switches a combination of the engines used by the execution unit on the basis of the identification information.

4. The information processing system according to any one of claims 1 to 3, wherein the switching unit obtains a configuration information indicating a hardware configuration of the information processing system, and switches the engine used by the execution unit on the basis of the identification information and the configuration information.

5. The information processing system according to any one of claims 1 to 4, wherein the switching unit determines whether or not the execution unit should perform the process by using a current engine, and switches the engine used by the execution unit when it is determined that process should not be performed by using the current engine.

6. The information processing system according to any one of claims 1 to 5, wherein
the process includes a process of detecting an object in a video; and
the execution unit extracts the identification information from video data obtained as the processing information.

7. The information processing system according to any one of claims 1 to 6, wherein the process includes a process of generating an authentication information used for biometric authentication.

8. An information processing apparatus comprising:
an execution unit that performs a process by using an engine;
an acquisition unit that obtains a processing information for performing the process;
an extraction unit that extracts an identification information for identifying the engine suitable to perform the process, from the processing information; and
a switching unit that switches the engine used by the execution unit on the basis of the identification information.

9. An information processing method for performing a process by using an engine, the information processing method comprising:
obtaining a processing information for performing the process;
extracting an identification information for identifying the engine suitable to perform the process, from the processing information; and
switching the engine used by the execution unit on the basis of the identification information.

10. A computer program for performing a process by using an engine, the computer program operating a computer:
to obtain a processing information for performing the process;
to extract an identification information for identifying the engine suitable to perform the process, from the processing information; and
to switch the engine used by the execution unit on the basis of the identification information.
